# FASCICULE DE BREVET EUROPEEN

(11) **EP 3 265 325 B1**
(45) Date de publication et mention de la délivrance du brevet: **29.04.2020**
(21) Numéro de dépôt: 16707763.5
(22) Date de dépôt: 03.03.2016
(51) Int. Cl.: B60C 1/00, C08K 3/04, C08K 5/14, C08K 5/098, C08L 9/00

(54) **PNEUMATIQUE COMPRENANT UNE COMPOSITION COMPRENANT UN DÉRIVÉ DU DIACRYLATE DE ZINC ET UN PÉROXYDE**
REIFEN MIT EINER ZUSAMMENSETZUNG MIT EINEM DERIVAT VON ZINKDIAKRYLAT UND EINEM PEROXID
TYRE COMPRISING A COMPOSITION COMPRISING A DERIVATIVE OF ZINC DIACRYLATE AND A PEROXIDE

(30) Priorité: 05.03.2015 FR 1551846
(43) Date de publication de la demande: 10.01.2018
(73) Titulaire: Compagnie Générale des Etablissements Michelin, 63000 Clermont-Ferrand (FR)
(72) Inventeur: VASSEUR, Didier, 63040 Clermont-Ferrand Cedex 9 (FR); CROCHET, Aurore, 63040 Clermont-Ferrand Cedex 9 (FR)
(74) Mandataire: Wroblewski, Nicolas Paul André
(86) Numéro de dépôt international: PCT/EP2016/054494
(87) Numéro de publication internationale: WO 2016/139285

(56) Documents cités:
- EP-A1- 0 139 044
- WO-A1-03/066352
- US-A- 4 529 770
- US-A1- 2004 144 464
- US-A1- 2010 012 241

## Description

L'invention est relative aux pneumatiques et plus particulièrement à ceux dont la composition d'une couche interne comprend un dérivé du diacrylate de zinc et un peroxyde.

De telles compositions sont décrites dans certains documents de l'état de l'art, pour des objets qui ne sont pas des couches internes de pneumatiques. Par exemple, le document US 2003/0065076 décrit des compositions pour chenilles de tank militaire, comprenant un élastomère, une charge renforçante, du diacrylate de zinc ou du diméthacrylate de zinc, et un peroxyde ; avec pour effet une amélioration de la résistance à l'abrasion. Dans ce document, le rapport entre les taux de peroxyde d'une part et de diacrylate de zinc ou de diméthacrylate de zinc d'autre part a pour valeur 0,1 ; 0,12 ou 0,15 selon les exemples.

De même, le document US 2005/0084638 décrit des compositions de mélanges de recouvrement d'un manchon à air pour suspensions, comprenant également un élastomère, une charge renforçante, du diacrylate de zinc et un peroxyde. Dans ce document, le rapport entre les taux de peroxyde et de diacrylate de zinc a pour valeur 0,15 ou 0,2 selon les exemples.

Dans le domaine spécifique des pneumatiques et plus particulièrement de leurs couches internes, depuis que les économies de carburant et la nécessité de protéger l'environnement sont devenues une priorité, il s'est avéré nécessaire de produire des pneumatiques ayant une résistance au roulement réduite, sans pénalisation des autres propriétés du pneumatique. De plus, les mélanges du pneumatique sont sensibles au vieillissement, ce vieillissement étant fonction de multiples facteurs et en particulier de l'usage et de la zone dans le pneumatique. Les mélanges de couche interne subissent généralement un régime thermique plus élevé que les mélanges externes qui sont refroidis par l'air externe. Ce vieillissement impacte les propriétés du matériau comme décrit dans deux publications de 1990 (Asahiro Ahagon, M. Kida, and H. Kaidou, Aging of Tire Parts during Service. I. Types of Aging in Heavy-Duty Tires, Rubber Chemistry and Technology: November 1990, Vol. 63, No. 5, pp. 683-697 et Hiroyuki Kaidou and A. Ahagon, Aging of Tire Parts during Service. II. Aging of Belt-Skim Rubbers in Passenger Tires, Rubber Chemistry and Technology: November 1990, Vol. 63, No. 5, pp. 698-712) avec comme conséquence une augmentation d'hystérèse et donc une augmentation de la résistance au roulement. Les manufacturiers ont développé des compositions de pneumatique permettant de diminuer cette résistance au roulement, de diverse façon et notamment par l'introduction de silice dans les mélanges comme charge renforçante.

Néanmoins, les manufacturiers cherchent toujours des solutions pour baisser encore la résistance au roulement des pneumatiques et c'est dans ce cadre que les demanderesses ont découvert de façon surprenante que l'hystérèse pouvait être nettement diminuée dans des compositions de caoutchouc pour pneumatique, avec un taux de charge renforçante réduit, la composition comprenant un dérivé du diacrylate de zinc et un peroxyde, à condition d'adopter un rapport entre le taux de peroxyde et le taux de dérivé du diacrylate de zinc adapté.

Par ailleurs, cette solution présente de nombreux autres avantages par rapport aux compositions de l'art antérieur et notamment une résistance au vieillissement améliorée en conditions thermiques et thermo-oxydantes qui sont les deux conditions de vieillissement que peuvent subir les mélanges de couche interne au cours de l'utilisation du pneumatique.

L'invention concerne donc un pneumatique muni d'une couche interne comprenant une composition de caoutchouc à base d'au moins un élastomère diénique, un dérivé du diacrylate de zinc sous la forme d'un sel de zinc de formule (I) 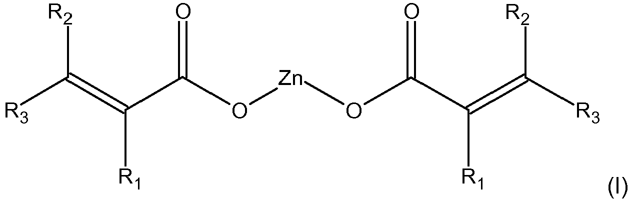 dans laquelle R1, R2 et R3 représentent indépendamment un atome d'hydrogène ou un groupe hydrocarboné en C1-C7 choisi parmi les groupes alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique,
ladite composition comprenant en outre un peroxyde, les taux de dérivé de diacrylate de zinc et de peroxyde étant tels que le rapport du taux de peroxyde et du taux de dérivé de diacrylate de zinc est inférieur ou égal à 0,09, ladite composition ne comprenant pas de charge renforçante ou en comprenant moins de 65 pce, le rapport du taux de charge et du taux de dérivé de diacrylate de zinc étant inférieur ou égal à 4, **la charge renforçante étant majoritairement constituée de noir de carbone.**

Préférentiellement, l'invention concerne un pneumatique tel que défini ci-dessus dans lequel R1, R2 et R3 représentent indépendamment un atome d'hydrogène ou un groupe méthyle. Plus préférentiellement, R2 et R3 représentent chacun un atome d'hydrogène. Plus préférentiellement également, R1 représente un groupe méthyle.

De préférence, l'invention concerne un pneumatique tel que défini ci-dessus dans lequel la quantité de dérivé du diacrylate de zinc dans la composition est comprise dans un domaine allant de 5 à 40 pce (parties en poids pour cent parties en poids d'élastomère), de préférence de 7 à 35 pce.

Préférentiellement, l'invention concerne un pneumatique tel que défini ci-dessus dans lequel le peroxyde dans la composition est un peroxyde organique, préférentiellement présent dans une quantité inférieure ou égale à 3 pce. Plus préférentiellement, la quantité de peroxyde dans la composition est comprise dans un domaine allant de 0,1 à 3 pce ; plus préférentiellement de 0,2 à 2,5 pce, et plus préférentiellement encore de 0,25 à 1,8 pce.

De manière préférentielle, l'invention concerne un pneumatique tel que défini ci-dessus dans lequel le rapport du taux de peroxyde et du taux de dérivé de diacrylate de zinc est compris entre 0,01 et 0,09 ; de préférence entre 0,03 et 0,09 et plus préférentiellement entre 0,05 et 0,08.

Préférentiellement, l'invention concerne un pneumatique tel que défini ci-dessus dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères. Plus préférentiellement, l'élastomère diénique est choisi dans le groupe constitué par les élastomères isopréniques, et préférentiellement dans le groupe constitué par le caoutchouc naturel, les polyisoprènes de synthèse, les différents copolymères d'isoprène et les mélanges de ces élastomères.

De manière préférentielle, l'invention concerne un pneumatique tel que défini ci-dessus dans lequel le taux de charge renforçante est compris dans un domaine allant de 5 à 60 pce ; plus préférentiellement de 10 à 50 pce, mieux, de 20 à 40 pce.

Préférentiellement, l'invention concerne un pneumatique tel que défini ci-dessus dans lequel le rapport du taux de charge et du taux de dérivé de diacrylate de zinc est compris dans un domaine allant de 0,15 à 3 ; de préférence de 1,5 à 3 ; alternativement et préférentiellement également de 0,7 à 1,3.

De préférence, l'invention concerne un pneumatique tel que défini ci-dessus dans lequel la composition ne contient pas de soufre moléculaire ou d'agent donneur de soufre en tant qu'agent de vulcanisation ou en contient moins de 0,5 pce. Préférentiellement, la composition ne contient pas de soufre moléculaire ou d'agent donneur de soufre en tant qu'agent de vulcanisation ou en contient moins de 0,3 pce et de préférence moins de 0,1 pce. Préférentiellement, la composition ne contient pas d'accélérateur de vulcanisation.

De manière préférentielle, l'invention concerne un pneumatique tel que défini ci-dessus dans lequel la composition ne contient pas d'agent antioxydant.

De préférence également, l'invention concerne un pneumatique tel que défini ci-dessus dans lequel la composition comprend en outre un plastifiant, de préférence choisi parmi les résines plastifiantes, les huiles d'extension et leurs mélanges.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition de la couche interne

La composition de caoutchouc de la couche interne du pneumatique selon l'invention est à base des constituants suivants : un dérivé du diacrylate de zinc sous la forme d'un sel de zinc de formule (I) et un peroxyde, les taux de dérivé de diacrylate de zinc et de peroxyde étant tels que le rapport du taux de peroxyde et du taux de dérivé de diacrylate de zinc est inférieur ou égal à 0,09 ladite composition ne comprenant pas de charge renforçante ou en comprenant moins de 65 pce, le rapport du taux de charge et du taux de dérivé de diacrylate de zinc étant inférieur ou égal à 4.

Dans la présente demande, l'expression « pce » (« phr » en anglais) signifie de manière connue parties en poids pour cent parties en poids d'élastomère. On exprime ainsi la quantité en poids des constituants des compositions par rapport à la quantité totale d'élastomères en poids considérée par convention à la valeur cent.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Au sens de la présente invention et de manière connue de l'homme de l'art, on entend par couche interne du pneumatique toute couche du pneumatique qui n'est pas en contact avec l'air ambiant ou le gaz de gonflage du pneumatique. En effet, il est possible de définir au sein du pneumatique trois types de zones :
- La zone interne du pneumatique, c'est-à-dire celle comprise entre les zones extérieure et intérieure. Cette zone inclut des couches ou nappes qui sont appelées ici « couches internes » du pneumatique. Ce sont par exemple des nappes carcasses, des nappes de ceintures de pneumatiques ou toute autre couche qui n'est pas en contact avec l'air ambiant ou le gaz de gonflage du pneumatique. Selon l'invention, la couche interne peut être choisie dans le groupe constitué par les nappes carcasse, les nappes sommet, les bourrages-tringle, les couches de découplage (couches destinées à assurer la liaison ou l'interface entre les couches précitées des pneumatiques) et une combinaison de ces couches internes, de préférence dans le groupe constitué par les nappes carcasse, les nappes sommet, les bourrages-tringle et une combinaison de ces couches internes.

- La zone radialement intérieure et en contact avec le gaz de gonflage, cette zone étant généralement constituée par la couche étanche aux gaz de gonflage, parfois appelée gomme intérieure (« inner liner » en anglais).
- La zone radialement extérieure et en contact avec l'air ambiant, cette zone étant essentiellement constituée de la bande de roulement et du flanc externe du pneumatique. La bande de roulement du pneumatique est disposée radialement au-dessus de la ceinture de pneumatique et constitue donc la couche en contact avec la surface de roulement.

### I-1 Elastomère diénique

Les compositions de couche interne du pneumatique de l'invention peuvent contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories: "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions de couche interne selon l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Selon un mode de réalisation préférentiel particulier, l'élastomère diénique est un élastomère majoritairement isoprénique (c'est-à-dire dont la fraction massique d'élastomère isoprénique est la plus grande, comparée à la fraction massique des autres élastomères). Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis 1,4 de synthèse; parmi ces polyisoprènes de synthèse, sont utilisés de préférence des polyisoprènes ayant un taux (% molaire) de liaisons cis 1,4 supérieur à 90%, plus préférentiellement encore supérieur à 98%. Préférentiellement selon ce mode de réalisation, le taux d'élastomère diénique isoprénique est de plus de 50 pce (c'est-à-dire de 50 à 100 pce), plus préférentiellement d'au moins 60 pce (c'est-à-dire de 60 à 100 pce), de manière plus préférentielle d'au moins 70 pce (c'est-à-dire de 70 à 100 pce), plus préférentiellement encore d'au moins 80 pce (c'est-à-dire de 80 à 100 pce) et de manière très préférentielle d'au moins 90 pce (c'est-à-dire de 90 à 100 pce). En particulier selon ce mode de réalisation, le taux d'élastomère diénique isoprénique est très préférentiellement de 100 pce.

### I-2 Dérivé du diacrylate de zinc

Le pneumatique selon l'invention est muni d'une couche interne qui comporte une composition qui comprend un dérivé du diacrylate de zinc sous la forme d'un sel de zinc de formule (I) 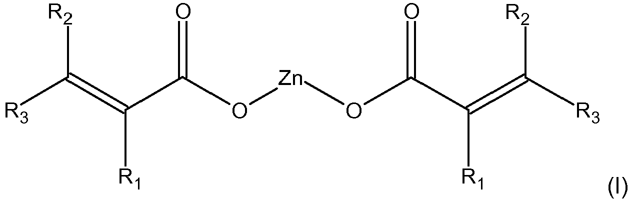 dans laquelle R1, R2 et R3 représentent indépendamment un atome d'hydrogène ou un groupe hydrocarboné en C1-C7 choisi parmi les groupes alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique.

Par groupe alkyle cyclique, on entend un groupe alkyle comprenant un ou plusieurs cycles.

Par groupe ou chaîne hydrocarboné(e) interrompu(e) par un ou plusieurs hétéroatomes, on entend un groupe ou chaîne comprenant un ou plusieurs hétéroatomes, chaque hétéroatome étant compris entre deux atomes de carbone dudit groupe ou de ladite chaîne, ou entre un atome de carbone dudit groupe ou de ladite chaîne et un autre hétéroatome dudit groupe ou de ladite chaîne ou entre deux autres hétéroatomes dudit groupe ou de ladite chaîne.

Le ou les hétéroatomes peuvent être un atome d'azote, de soufre ou d'oxygène.

Préférentiellement, R1, R2 et R3 représentent indépendamment un atome d'hydrogène ou un groupe méthyle. Plus préférentiellement, R2 et R3 représentent chacun un atome d'hydrogène et selon une alternative également très préférentielle R1 représente un groupe méthyle.

Dans la composition de la couche interne du pneumatique selon l'invention, la quantité de dérivé du diacrylate de zinc est de préférence comprise dans un domaine allant de 10 à 50 pce, de préférence de 20 à 30 pce. Au-delà d'un taux de 50 pce la dispersion est moins bonne et les propriétés de la composition peuvent se dégrader tandis qu'en deçà d'un taux de 10 pce, l'effet du dérivé de diacrylate de zinc est moins notable sur la rigidification et le renforcement.

A titre d'exemple, on trouve dans le commerce des dérivés de diacrylate de zinc tels que le diacrylate de zinc (ZDA) « DIMALINK 633 » de la société CRAY VALLEY ou le diméthacrylate de zinc (ZDMA) « DIMALINK 634 » de la société CRAY VALLEY.

### I-3 Peroxyde

En plus de l'élastomère diénique et du dérivé de diacrylate de zinc précédemment décrits, la composition de la couche interne du pneumatique de l'invention utilise un peroxyde, qui peut être tout peroxyde connu de l'homme de l'art.

Parmi les peroxydes, bien connus de l'homme de l'art, il est préférable d'utiliser pour l'invention un peroxyde choisi dans la famille des peroxydes organiques, et en particulier un peroxyde choisi parmi le peroxyde de dicumyl, les peroxydes d'aryl ou de diaryl, le peroxyde de diacetyl, le peroxyde de benzoyle, le peroxyde de dibenzoyle, le peroxyde de ditertbutyl, le peroxyde de tertbutylcumyl, le 2,5-bis (tertbutylperoxy)-2,5-dimethylhexane, et les mélanges de ces derniers.

Il existe dans le commerce divers produits conditionnes, connus sous leurs marques de fabrique; on peut citer:-le « Dicup » de la société Hercules Powder Co., le « Perkadox Y12 » de la Société Noury van der Lande, le « Peroximon F40 » de la société Montecatini Edison S.p.A., le « Trigonox » de la Société Noury van der Lande, le « Varox » de la société R.T.Vanderbilt Co., ou encore le « Luperko », de la société Wallace & Tiernan, Inc.

Préférentiellement, la quantité de peroxyde à utiliser pour les besoins de l'invention est inférieure ou égale à 3 pce. De préférence, la quantité de peroxyde dans la composition est comprise dans un domaine allant de 0,1 à 3 pce. En effet, en dessous d'une quantité de 0,1 pce, l'effet du peroxyde n'est pas notable tandis qu'au-delà de 3 pce, les propriétés d'allongement rupture et donc de résistance de la composition sont diminuées. Plus préférentiellement, la quantité de peroxyde dans la composition est comprise dans un domaine allant de 0,2 à 2,5 pce, de préférence de 0,25 à 1,8 pce.

Quelles que soient les quantités de dérivé de diacrylate de zinc et de peroxyde vues ci-dessus, il est important pour l'invention que le rapport du taux de peroxyde et du taux de dérivé de diacrylate de zinc soit inférieur à 0,09. Au-delà d'un tel taux la synergie entre le dérivé de diacrylate de zinc et le peroxyde n'est pas aussi performante en termes d'effet sur la rhéométrie et sur l'allongement rupture, en particulier pour une composition soumise aux contraintes d'une couche interne de pneumatique. De préférence, le rapport du taux de peroxyde et du taux de dérivé de diacrylate de zinc est compris entre 0,01 et 0,09 ; de préférence entre 0,03 et 0,09 et plus préférentiellement entre 0,05 et 0,08.

### I-4 Charge renforçante

L'élastomère diénique, le dérivé de diacrylate de zinc et le peroxyde sont suffisants à eux seuls pour que soit réalisée l'invention. Néanmoins, la composition de la couche interne du pneumatique selon l'invention peut comprendre une charge renforçante.

L'état physique sous lequel se présente la charge renforçante est indifférent, que ce soit sous forme de poudre, de microperles, de granulés, de billes ou toute autre forme densifiée appropriée.

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge à condition que la charge renforçante soit majoritairement constituée de noir de carbone.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut également contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m²/g, plus préférentiellement comprise entre 60 et 300 m²/g.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

La fraction volumique de charge renforçante dans la composition de caoutchouc est définie comme étant le rapport du volume de la charge renforçante sur le volume de l'ensemble des constituants de la composition, étant entendu que le volume de l'ensemble des constituants est calculé en additionnant le volume de chacun des constituants de la composition. La fraction volumique de charge renforçante dans une composition est donc définie comme le rapport du volume de la charge renforçante sur la somme des volumes de chacun des constituants de la composition, et de préférence, cette fraction volumique est comprise entre 5 % et 20 %, préférentiellement entre 5 % et 15%. D'une manière préférentielle équivalente, le taux de charge renforçante totale (noir de carbone et/ou silice) est de moins de 65 pce, de préférence de 5 à 60 pce, plus préférentiellement de 10 à 50 pce et de manière très préférentielle, de 20 à 40 pce.

En effet, un avantage de l'invention est de permettre de réduire le taux de charge renforçante sans perdre en performance. Au-delà d'un taux de 65 pce, cet avantage n'est plus aussi grand et l'hystérèse de la composition augmente.

Ainsi, de préférence, le rapport du taux de charge et du taux de dérivé de diacrylate de zinc est compris dans un domaine allant de 0,15 à 3, de préférence de 1,5 à 3. Alternativement et préférentiellement également, le rapport du taux de charge et du taux de dérivé de diacrylate de zinc est compris dans un domaine allant de 0,7 à 1,3.

**Selon l'invention,** la composition de la couche interne du pneumatique selon l'invention comprend du noir de carbone à titre majoritaire comme charge renforçante. Par charge renforçante majoritaire, on entend celle qui présente le plus fort taux parmi les charges renforçantes présentes dans la composition. Notamment, on entend par charge renforçante majoritaire toute charge renforçante qui représente au moins 50% en poids des charges renforçantes présentes, préférentiellement plus de 50% et plus préférentiellement plus de 60%, voire plus de 70%, voire plus de 80%, voire plus de 90%, voire 100%.

Ces compositions peuvent optionnellement également contenir en complément des charges renforçantes, et en particulier lorsque de la silice est utilisée dans la composition de la couche interne du pneumatique selon l'invention, des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

A titre d'agent de couplage, on utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sₓ - A - Z,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 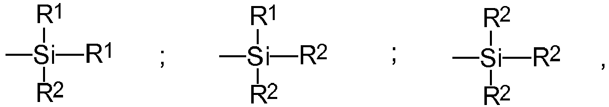 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (II) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc utiles à l'invention, la teneur en agent de couplage est préférentiellement comprise entre 2 et 15 pce, plus préférentiellement entre 3 et 13 et encore plus préférentiellement entre 5 et 10 pce.

### I-5 Système de vulcanisation

La composition de la couche interne du pneumatique selon l'invention ne nécessite pas de système de vulcanisation, ce qui est l'un de ses avantages puisque cela permet de simplifier la formule, et la préparation de la composition. Si cependant un système de vulcanisation est présent dans la composition, il l'est préférablement dans des quantités faibles explicitées plus bas.

Le système de vulcanisation proprement dit est habituellement à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre moléculaire (ou de manière équivalente les agents donneurs de soufre moléculaire), lorsqu'il est utilisé, l'est à un taux préférentiellement inférieur à 0,5 pce, de préférence inférieur à 0,3 pce, plus préférentiellement à un taux inférieur à 0,1 pce. De manière très préférentielle, la composition est dépourvue de soufre moléculaire.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Si un accélérateur est utilisé, il l'est à des taux tels que ceux pratiqués par l'homme du métier des compositions vulcanisées pour pneumatique. Néanmoins, la composition de la couche interne du pneumatique selon l'invention est préférentiellement dépourvue de tout accélérateur de vulcanisation.

### I-6 Autres additifs possibles

Les compositions de couche interne des pneumatiques conformes à l'invention comportent optionnellement également tout ou partie des additifs usuels habituellement utilisés dans les compositions d'élastomères destinées notamment à la fabrication de couches internes, comme par exemple des pigments, des agents de protection tels que cires anti-ozone, anti-ozonants chimiques, anti-oxydants, des agents plastifiants tels que ceux proposés ci-après, des agents anti-fatigue, des résines renforçantes, des accepteurs (par exemple résine phénolique novolaque) ou des donneurs de méthylène (par exemple HMT ou H3M).

Selon un mode préférentiel, la composition de la couche interne du pneumatique de l'invention est dépourvue d'agent anti-oxydant.

Selon un mode préférentiel, la composition de la couche interne du pneumatique de l'invention est dépourvue d'agent plastifiant. De manière alternative et selon un mode de réalisation également préférentiel, la composition selon l'invention comporte en outre un agent plastifiant. De préférence cet agent plastifiant est une résine hydrocarbonée solide (ou résine plastifiante), une huile d'extension (ou huile plastifiante), ou un mélange des deux.

Il va de soi que l'invention concerne les pneumatiques munis des couches internes comprenant les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation et notamment le peroxyde des compositions selon l'invention; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères et les charges renforçantes (et éventuellement les agents de couplage et/ou d'autres ingrédients), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de réticulation et notamment du peroxyde durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation et notamment le peroxyde, à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits dits « couches internes » tels que nappe carcasse, nappes sommet (ou ceinture de pneumatique), bourrage tringle. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Les exemples qui suivent illustrent l'invention sans toutefois la limiter.

### III- Exemples de réalisation de l'invention

### 111-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

### Propriétés dynamiques (après cuisson): Essai de traction

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 50%, 100% et 300% d'allongement notés respectivement M50, M100 et M300.

On mesure également les contraintes à la rupture (en MPa) et les allongements à la rupture (AR en %), à 23°C ± 2°C, selon la norme NF T 46-002. Les résultats sont exprimés « en base 100 » c'est à dire par rapport au témoin auquel une valeur 100 est attribuée.

Toutes ces mesures de traction sont effectuées dans les conditions normales de température (23±2°C) et d'hygrométrie (50±5% d'humidité relative), selon la norme française NF T 40-101 (décembre 1979).

Les propriétés dynamiques G*(10%) et tan(δ)max à 60°C sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions définies de température par exemple à 60°C selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique G* et le facteur de perte tan(δ). Pour le cycle retour, on indique la valeur maximale de tan(δ) observée, noté tan(δ)max, ainsi que le module complexe de cisaillement dynamique G*(10%) à 10% de déformation, à 60°C.

On rappelle que, de manière bien connue de l'homme du métier, la valeur de tan(δ)max à 60°C est représentative de l'hystérèse du matériau donc de la résistance au roulement : plus tan(δ)max à 60°C est faible, plus la résistance au roulement est réduite.

Les mêmes propriétés dynamiques peuvent être mesurées après avoir fait subir à la composition un vieillissement thermique et thermo-oxydant. On s'intéresse en particulier à l'allongement rupture et au M100 après vieillissement pour étudier l'impact du vieillissement sur les compositions. Pour cela, les échantillons de compositions sont vieillies dans les conditions décrites ci-dessous, puis les propriétés sont mesurées.
- Vieillissement thermique : 110°C sous azote pendant 15 jours sur plaque de 2,5 mm d'épaisseur.
- Vieillissement thermo-oxydant : 77°C sous air pendant 15 jours sur plaque de 2,5 mm d'épaisseur.

### III-3 Exemples

### Exemple 1

Cet exemple a pour objet de comparer les différentes propriétés de caoutchouterie de compositions témoins à des compositions conformes à l'invention. Les compositions testées sont présentées dans le tableau 1 ci-dessous.

**Tableau 1**

| | **T1** | **T2** | **T3** | **C1** | **C2** | **C3** | **C4** |
|---|---|---|---|---|---|---|---|
| NR (1) | 100 | 100 | 100 | 100 | 100 | 100 | 100 |
| Dérivé ZDA (2) | 20 | 20 | 20 | 20 | 20 | 20 | 20 |
| Peroxyde (3) | 3.5 | 3 | 2 | 1,5 | 1,5 | 1 | 0,75 |
| Peroxyde/dérivé ZDA | 0,175 | 0,15 | 0,1 | 0,075 | 0,075 | 0,05 | 0,037 |
| Charge (4) | 3 | 3 | 3 | 3 | 20 | 3 | 3 |
| Charge/dérivé ZDA | 0,15 | 0,15 | 0,15 | 0,15 | 1 | 0,15 | 0,15 |
| ZnO (5) | 6 | 6 | 6 | 6 | 6 | 6 | 6 |

| | | | | | | | |
|---|---|---|---|---|---|---|---|
| (1) Caoutchouc naturel (2) Diméthacrylate de zinc (ZDMA) « DIMALINK 634 » de la société CRAY VALLEY (3) Peroxyde de dicumyl « Dicup » de la société Hercules (4) Noir de carbone grade ASTM N326 (société Cabot) (5) Oxyde de zinc (grade industriel - société Umicore) | | | | | | | |

Le tableau 2 ci-dessous donne les propriétés mesurées pour les différentes compositions.

**Tableau 2**

| | T1 | T2 | T3 | C1 | C2 | C3 | C4 |
|---|---|---|---|---|---|---|---|
| AR (base 100) | 25 | 53 | 100 | 135 | 132 | 150 | 175 |

Par rapport aux compositions témoins, on note que les compositions C1, C2 et C3 présentent un allongement rupture très amélioré.

### Exemple 2

Cet exemple a pour objet de comparer les différentes propriétés de caoutchouterie d'une composition témoin usuelle en mélange interne, à des compositions conformes à l'invention, avant et après vieillissement. Les compositions testées sont présentées dans le tableau 3 ci-dessous. Le tableau 4 ci-dessous donne les propriétés mesurées pour les différentes compositions.

Par rapport aux compositions témoins, on note que les compositions C1, C2 et C5 présentent des propriétés après vieillissement nettement meilleure que la composition témoin T1.

**Tableau 3**

| | **T4** | **C1** | **C2** | **C5** |
|---|---|---|---|---|
| NR (1) | 100 | 100 | 100 | 100 |
| Dérivé ZDA (2) | - | 20 | 20 | 20 |
| Peroxyde (3) | - | 1,5 | 1,5 | 1,5 |
| Peroxyde/dérivé ZDA | - | 0,075 | 0,075 | 0,075 |
| Charge (4) | 50 | 3 | 20 | 40 |
| Charge/dérivé ZDA | - | 0,15 | 1 | 2 |
| ZnO (5) | 6 | 6 | 6 | 6 |
| Acide stéarique (6) | 0,6 | - | - | - |
| Antioxydant (7) | 2 | - | - | - |
| Soufre | 5 | - | - | - |
| Accélérateur (8) | 1 | - | - | - |

| | | | | |
|---|---|---|---|---|
| (1) Caoutchouc naturel (2) Diméthacrylate de zinc (ZDMA) « DIMALINK 634 » de la société CRAY VALLEY (3) Peroxyde de dicumyl « Dicup » de la société Hercules (4) Noir de carbone grade ASTM N326 (société Cabot) (5) Oxyde de zinc (grade industriel - société Umicore) (6) Stéarine « Pristerene 4931 » de la société Uniqema (7) N-(1,3-diméthylbutyl)-N'-phényl-p-phénylènediamine « Santoflex 6-PPD » de la société Flexsys (8) N-dicyclohexyl-2-benzothiazol-sulfénamide « Santocure DCBS » de la société Flexsys | | | | |

**Tableau 4 : vieillissement thermo-oxydant 15 jours à 77°c**

| | T1 | C1 | C2 | C5 |
|---|---|---|---|---|
| M100 (base 100) avant vieillissement | 100 | 70 | 100 | 140 |
| M100 (base 100) après vieillissement | 200 | 75 | 103 | 143 |
| AR (base 100) avant vieillissement | 100 | 110 | 85 | 65 |
| AR (base 100) après vieillissement | 45 | 100 | 80 | 62 |
| Tg delta max à 60°c avant vieillissement | 100 | 20 | 35 | 60 |
| Tg delta max à 60°c après vieillissement | 130 | 22 | 37 | 65 |

**Tableau 5 : vieillissement thermique 15 jours à 110°c**

| | T1 | C1 | C2 | C5 |
|---|---|---|---|---|
| M100 (base 100) avant vieillissement | 100 | 70 | 100 | 140 |
| M100 (base 100) après vieillissement | 85 | 70 | 85 | 115 |
| AR (base 100) avant vieillissement | 100 | 110 | 85 | 65 |
| AR (base 100) après vieillissement | 60 | 85 | 100 | 85 |

Les résultats présentés dans les tableaux 4 et 5 montrent que les propriétés mécaniques des compositions selon invention n'évoluent que très faiblement après les vieillissements. Ces compositions conservent aussi le gain très important en hystérèse.

## Revendications

1. Pneumatique muni d'une couche interne, ladite couche interne comprenant une composition de caoutchouc à base d'au moins un élastomère diénique, un dérivé du diacrylate de zinc sous la forme d'un sel de zinc de formule (I) 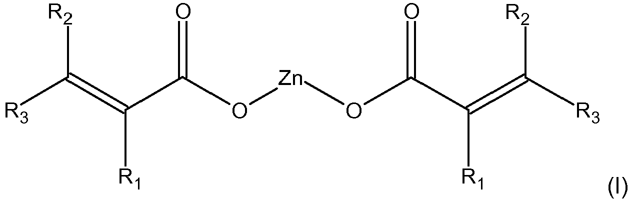
dans laquelle R₁, R₂ et R₃ représentent indépendamment un atome d'hydrogène ou un groupe hydrocarboné en C₁-C₇ choisi parmi les groupes alkyles linéaires, ramifiés ou cycliques, les groupes aralkyles, les groupes alkylaryles et les groupes aryles, et éventuellement interrompus par un ou plusieurs hétéroatomes, R₂ et R₃ pouvant former ensemble un cycle non aromatique,
ladite composition comprenant en outre un peroxyde, les taux de dérivé de diacrylate de zinc et de peroxyde étant tels que le rapport du taux de peroxyde et du taux de dérivé de diacrylate de zinc est inférieur ou égal à 0,09 ;
ladite composition ne comprenant pas de charge renforçante ou en comprenant moins de 65 parties en poids pour cent parties en poids d'élastomère, pce, le rapport du taux de charge et du taux de dérivé de diacrylate de zinc étant inférieur ou égal à 4,
la charge renforçante étant majoritairement constituée de noir de carbone.

2. Pneumatique selon la revendication 1, dans lequel R₁, R₂ et R₃ représentent indépendamment un atome d'hydrogène ou un groupe méthyle.

3. Pneumatique selon l'une quelconque des revendications précédentes, dans lequel R₂ et R₃ représentent chacun un atome d'hydrogène.

4. Pneumatique selon l'une quelconque des revendications précédentes, dans lequel R₁ représente un groupe méthyle.

5. Pneumatique selon l'une quelconque des revendications précédentes, dans lequel la quantité de dérivé du diacrylate de zinc dans la composition est comprise dans un domaine allant de 5 à 40 pce, de préférence de 7 à 35 pce.

6. Pneumatique selon l'une quelconque des revendications précédentes, dans lequel le peroxyde dans la composition est un peroxyde organique.

7. Pneumatique selon l'une quelconque des revendications précédentes, dans lequel la quantité de peroxyde dans la composition est comprise dans un domaine allant de 0,1 à 3 pce, de préférence de 0,2 à 2,5 pce.

8. Pneumatique selon l'une quelconque des revendications précédentes, dans lequel le rapport du taux de peroxyde et du taux de dérivé de diacrylate de zinc est compris entre 0,01 et 0,09 ; de préférence entre 0,03 et 0,09 et plus préférentiellement entre 0,05 et 0,08.

9. Pneumatique selon l'une quelconque des revendications précédentes, dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

10. Pneumatique selon la revendication 9, dans lequel l'élastomère diénique est choisi dans le groupe constitué par les élastomères isopréniques.

11. Pneumatique selon la revendication 10, dans lequel l'élastomère diénique est choisi dans le groupe constitué par le caoutchouc naturel, les polyisoprènes de synthèse, les différents copolymères d'isoprène et les mélanges de ces élastomères.

12. Pneumatique selon l'une quelconque des revendications précédentes, dans lequel le taux de charge renforçante est compris dans un domaine allant de 5 à 60 pce, de préférence de 10 à 50 pce.

13. Pneumatique selon l'une quelconque des revendications précédentes, dans lequel le rapport du taux de charge et du taux de dérivé de diacrylate de zinc est compris dans un domaine allant de 0,15 à 3 ; de préférence de 1,5 à 3.

14. Pneumatique selon l'une quelconque des revendications précédentes, dans lequel la composition ne contient pas de soufre moléculaire ou d'agent donneur de soufre en tant qu'agent de vulcanisation ou en contient moins de 0,5 pce, de préférence moins de 0,3 pce.

15. Pneumatique selon l'une quelconque des revendications précédentes, dans lequel la couche interne est choisie dans le groupe constitué par les nappes carcasse, les nappes sommet, les bourrages-tringle, les couches de découplage et une combinaison de ces couches internes.

## Patentansprüche

1. Reifen, ausgestattet mit einer Innenschicht, wobei die Innenschicht eine Kautschukzusammensetzung umfasst, basierend auf mindestens einem Dien-Elastomer, einem Zinkdiacrylat-Derivat in Form eines Zinksalzes der Formel (I): 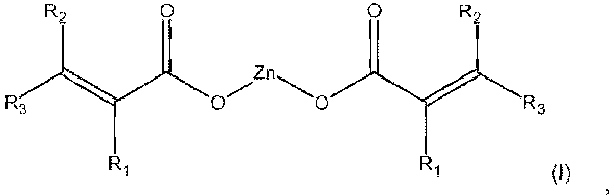
worin R₁, R₂ und R₃ unabhängig ein Wasserstoffatom oder eine C₁-C₇-Kohlenwasserstoffgruppe, ausgewählt aus geraden, verzweigten oder cyclischen Alkylgruppen, Aralkylgruppen, Alkylarylgruppen und Arylgruppen, die gegebenenfalls durch ein oder mehrere Heteroatome unterbrochen sind, darstellen, wobei R₂ und R₃ miteinander einen nicht-aromatischen Ring bilden können,
wobei die Zusammensetzung ferner ein Peroxid umfasst, wobei die Anteile an Zinkdiacrylat-Derivat und Peroxid derart sind, dass das Verhältnis des Anteils an Peroxid zum Anteil an Zinkdiacrylat-Derivat kleiner als oder gleich 0,09 ist,
wobei die Zusammensetzung keinen verstärkenden Füllstoff umfasst oder davon weniger als 65 Masseteile pro hundert Masseteile Elastomer, phr, umfasst, wobei das Verhältnis des Anteils an Füllstoff zum Anteil an Zinkdiacrylat-Derivat kleiner als oder gleich 4 ist,
wobei der verstärkende Füllstoff größtenteils aus Ruß besteht.

2. Reifen nach Anspruch 1, wobei R₁, R₂ und R₃ unabhängig ein Wasserstoffatom oder eine Methylgruppe darstellen.

3. Reifen nach einem der vorhergehenden Ansprüche, wobei R₂ und R₃ jeweils ein Wasserstoffatom darstellen.

4. Reifen nach einem der vorhergehenden Ansprüche, wobei R₁ eine Methylgruppe darstellt.

5. Reifen nach einem der vorhergehenden Ansprüche, wobei die Menge an Zinkdiacrylat-Derivat in der Zusammensetzung in einem Bereich von 5 bis 40 phr, vorzugsweise von 7 bis 35 phr, liegt.

6. Reifen nach einem der vorhergehenden Ansprüche, wobei das Peroxid in der Zusammensetzung ein organisches Peroxid ist.

7. Reifen nach einem der vorhergehenden Ansprüche, wobei die Menge an Peroxid in der Zusammensetzung in einem Bereich von 0,1 bis 3 phr, vorzugsweise von 0,2 bis 2,5 phr, liegt.

8. Reifen nach einem der vorhergehenden Ansprüche, wobei das Verhältnis des Anteils an Peroxid zum Anteil an Zinkdiacrylat-Derivat zwischen 0,01 und 0,09, vorzugsweise zwischen 0,03 und 0,09 und insbesondere zwischen 0,05 und 0,08 beträgt.

9. Reifen nach einem der vorhergehenden Ansprüche, wobei das Dien-Elastomer aus der Gruppe ausgewählt ist bestehend aus Polybutadienen, synthetischen Polyisoprenen, Naturkautschuk, Butadien-Copolymeren, Isopren-Copolymeren und Gemischen dieser Elastomere.

10. Reifen nach Anspruch 9, wobei das Dien-Elastomer aus der Gruppe ausgewählt ist bestehend aus Isopren-Elastomeren.

11. Reifen nach Anspruch 10, wobei das Dien-Elastomer aus der Gruppe ausgewählt ist bestehend aus Naturkautschuk, synthetischen Polyisoprenen, den verschiedenen Isopren-Copolymeren und Gemischen dieser Elastomere.

12. Reifen nach einem der vorhergehenden Ansprüche, wobei der Anteil an verstärkendem Füllstoff in einem Bereich von 5 bis 60 phr, vorzugsweise von 10 bis 50 phr, liegt.

13. Reifen nach einem der vorhergehenden Ansprüche, wobei das Verhältnis des Anteils an Füllstoff zum Anteil an Zinkdiacrylat-Derivat in einem Bereich von 0,15 bis 3, vorzugsweise von 1,5 bis 3, liegt.

14. Reifen nach einem der vorhergehenden Ansprüche, wobei die Zusammensetzung keinen molekularen Schwefel oder keinen Schwefeldonor als Vulkanisierungsmittel enthält oder davon weniger als 0,5 phr, vorzugsweise weniger als 0,3 phr, enthält.

15. Reifen nach einem der vorhergehenden Ansprüche, wobei die Innenschicht aus der Gruppe ausgewählt ist bestehend aus Karkassenlagen, Gürtellagen, Wulstkernprofilen, Entkopplungsschichten und einer Kombinationen dieser Innenschichten.

## Claims

1. Tyre provided with an internal layer, said internal layer comprising a rubber composition based on at least one diene elastomer, a zinc diacrylate derivative in the form of a zinc salt of formula (I): 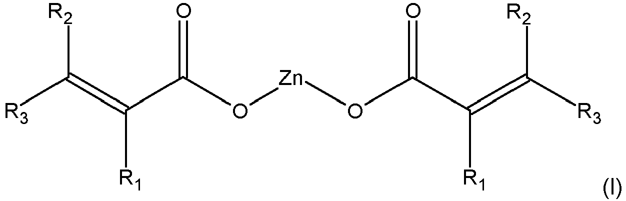
wherein R₁, R₂ and R₃ independently represent a hydrogen atom or a C₁-C₇ hydrocarbon group selected from linear, branched or cyclic alkyl groups, aralkyl groups, alkylaryl groups and aryl groups and optionally interrupted by one or more heteroatoms, it being possible for R₂ and R₃ to together form a nonaromatic ring,
said composition additionally comprising a peroxide, the contents of zinc diacrylate derivative and of peroxide being such that the ratio of the content of peroxide to the content of zinc diacrylate derivative is less than or equal to 0.09,
said composition not comprising a reinforcing filler or comprising less than 65 phr thereof, the ratio of the content of filler to the content of zinc diacrylate derivative being less than or equal to 4,
the reinforcing filler being predominantly composed of carbon black.

2. Tyre according to Claim 1, wherein R₁, R₂ and R₃ independently represent a hydrogen atom or a methyl group.

3. Tyre according to any one of the preceding claims, wherein R₂ and R₃ each represent a hydrogen atom.

4. Tyre according to any one of the preceding claims, wherein R₁ represents a methyl group.

5. Tyre according to any one of the preceding claims, wherein the amount of zinc diacrylate derivative in the composition is within a range extending from 5 to 40 phr (parts by weight per hundred parts by weight of elastomer), preferably from 7 to 35 phr.

6. Tyre according to any one of the preceding claims, wherein the peroxide in the composition is an organic peroxide.

7. Tyre according to any one of the preceding claims, wherein the amount of peroxide in the composition is within a range extending from 0.1 to 3 phr, preferably from 0.2 to 2.5 phr.

8. Tyre according to any one of the preceding claims, wherein the ratio of the content of peroxide to the content of zinc diacrylate derivative is between 0.01 and 0.09, preferably between 0.03 and 0.09 and more preferably between 0.05 and 0.08.

9. Tyre according to any one of the preceding claims, wherein the diene elastomer is selected from the group consisting of polybutadienes, synthetic polyisoprenes, natural rubber, butadiene copolymers, isoprene copolymers and the mixtures of these elastomers.

10. Tyre according to Claim 9, wherein the diene elastomer is selected from the group consisting of isoprene elastomers.

11. Tyre according to Claim 10, wherein the diene elastomer is selected from the group consisting of natural rubber, synthetic polyisoprenes, the various isoprene copolymers and the mixtures of these elastomers.

12. Tyre according to any one of the preceding claims, wherein the content of reinforcing filler is within a range extending from 5 to 60 phr, preferably from 10 to 50 phr.

13. Tyre according to any one of the preceding claims, wherein the ratio of the content of filler to the content of zinc diacrylate derivative is within a range extending from 0.15 to 3, preferably from 1.5 to 3.

14. Tyre according to any one of the preceding claims, wherein the composition does not contain molecular sulphur or a sulphur-donating agent as vulcanization agent or contains less than 0.5 phr, preferably less than 0.3 phr thereof.

15. Tyre according to any one of the preceding claims, wherein the internal layer is selected from the group consisting of carcass plies, crown plies, bead-wire fillings, decoupling layers and a combination of these internal layers.
